# EUROPEAN PATENT SPECIFICATION

(11) **EP 2 100 425 B1**
(45) Date of publication and mention of the grant of the patent: **24.05.2017**
(21) Application number: 07870431.9
(22) Date of filing: 05.12.2007
(51) Int. Cl.: H04L 29/06, G06Q 10/00

(54) **COMMUNICATION SYSTEM**
KOMMUNIKATIONSSYSTEM
SYSTÈME DE COMMUNICATION

(30) Priority: 08.12.2006 GB 0624577
(43) Date of publication of application: 16.09.2009
(73) Proprietor: Skype, Dublin 2 (IE)
(72) Inventor: MADANES, Rodrigo, London W11 2JD (GB); SOPIEVA, Natasha Valerie, St Albans AL3 5JH (GB); NILSSON, Linus, 93135 Skelleftea (SE); CORR, Nick, London W1G 7EP (GB)
(74) Representative: Driver, Virginia Rozanne
(86) International application number: PCT/IB2007/004378
(87) International publication number: WO 2008/068633

(56) References cited:
- US-A1- 2003 050 977
- US-A1- 2003 078 981
- US-A1- 2005 080 859
- US-A1- 2006 239 279
- US-B1- 6 260 148
- US-B1- 6 564 264

## Description

### Field of the Invention

The present invention relates to a method and system for storing data relating to a called party in a communication system. In particular the invention relates, but not exclusively to storing called party data in a communication system.

### Background of the Invention

In a communication system a communication network is provided, which can connect two communication terminals so that the terminals can send information to each other in a call or other communication event. Information may include voice, text, images or video.

Protocols which are used to carry voice signals over the internet are commonly referred to as Voice over Internet Protocol (VoIP) and may also be referred to as Voice over Broadband. VoIP is the protocol used for routing of voice conversations over the Internet or through any other IP-based network.

One such communication system to use VoIP is a peer to peer communication system, in which a plurality of end users can be connected for communication purposes via a communications structure such as the internet. A peer to peer network may also use other protocols to facilitate the transfer of other data such as text images or video. The communications structure is substantially decentralised with regard to communication route switching therein for connecting the end users. That is, the end users can establish their own communication routes through the structure based on exchange of one or more authentication certificates (user identity certificates - UIC) to acquire access to the structure. The structure includes an administration arrangement issuing the certificates to the end users. Such a communication system is described in WO 2005/009019.

In a communication system, such as a peer to peer system, client software is installed on end user devices such as personal computers (PCs) to allow the end users to communicate via the communications network. The user interface of the client software can be controlled by the client to display user facilities and to indicate events occurring, such as an incoming call.

When making a voice call or setting up another type of communication with a user device the user may either manually input a number identifying the called party or recall a number that has been pre-stored in a list of contacts on the client by the user. If the user does not know the number it is necessary for the user to look up the number possibly using a number look up service before initiating the call.

When making a call to a number that has not been pre-stored by the user, the user may be required to look up the same number more than once if he does not remember to save the number in his list of contacts, or to record the number by other means for example in an address book.

US6564264 teaches a system, apparatus and method to automatically update address information of a user's outgoing and incoming messages to/from a communication network thereby relieving the user of the burden of manually entering address changes into a user address book. US6260148 teaches a messaging system in which subscription requests are transmitted over the internet using internet protocols such as extensions of HTTP. US2003/0078981 teaches a system and method for the population of a contact list on a portable device.

It is therefore an aim of embodiments of the invention to address at least one of the above identified problems.

### Summary of the Invention

According to a first aspect of the present invention there is provided a method of populating a store with information identifying user devices capable of communicating in a communications network, the method comprising: establishing a communication event from an initiator device to a recipient device via the communication network using information identifying the recipient device; receiving from a user of the initiator device a selection signal indicating that said information identifying the recipient device is to populate the store, wherein the store stores the information identifying the recipient device together with associated information, and wherein the information identifying the recipient and the associated information are stored as an entry in the store, and transmitting said information identifying the recipient device from the initiator device to the store via the communication network, wherein each entry in the store is editable by a plurality of users.

Also described herein is a method of storing information relating to a plurality of user devices capable of communicating in a communications network on a store, the method comprising;
inputting to the store information necessary to establish communication with the plurality of user devices via the communications network; generating call statistics relating to the number of communication events occurring with the plurality of user device across the communications network; inputting to the store information relating to the call statistics for the plurality of user devices.

Also described herein is a method of storing the number of communication events initiated by initiating nodes in a first network to a receiving node in a second network comprising; transmitting information from an initiating node in the first network to the receiving node in the second network via a gateway; monitoring the information transmitted via the gateway to the receiving node; determining the number of communication events received at the receiving node from the information transmitted via the gateway; and storing the number of communication events received by the receiving node in a data store.

Also described herein is a method of communicating in a communication network using communication information stored on a data store by a plurality of users comprising; inputting searching criteria to search the data store by a first user; retrieving a set of information from the data store corresponding to the searching criteria; determining if any information in the set was stored on the data store by a user associated with the first user; displaying any information that was determined as being updated by a user associated with the first user, to the first user; initiating a communication event by the first user to a second user using the information presented to the first user.

Also described herein is is provided a communication system comprising; a store arranged to store information identifying a plurality of devices capable of communicating in the communication system; and an initiator device arranged to initiate a communication event to a recipient device via the communication system using information identifying the recipient device, wherein the initiator device comprises; receiving means arranged to receive from the user of the initiator device a selection signal indicating that the information identifying the recipient device is to populate the store; and transmitting means arranged to transmit said information identifying the recipient device to the store via the communication system.

According to a second aspect of the present invention there is provided an initiator device arranged to initiate a communication event to a recipient device in a communication network comprising; input means for inputting information identifying the recipient device to initiate the communication event; receiving means arranged to receive from the user of the initiator device a selection signal indicating that the information identifying the recipient device is to populate the store, wherein the store stores the information identifying the recipient device together with associated information, and wherein the information identifying the recipient and the associated information are stored as an entry in the store; and transmitting means arranged to transmit said information identifying the recipient device to the store via the communication network, wherein each entry in the store is editable by a plurality of users.

According to a third aspect of the present invention there is provided a computer program product comprising program code means which when executed on an initiator device implement the steps of; establishing a communication event from the initiator device to a recipient device via a communication network using information identifying the recipient device;
receiving from a user of the initiator device a selection signal indicating that said information identifying the recipient device is to populate a store, wherein the store stores the information identifying the recipient device together with associated information, and wherein the information identifying the recipient and the associated information are stored as an entry in the store; transmitting said information identifying the recipient device from the initiator device to the store via the communication network, wherein each entry in the store is editable by a plurality of users.

According to an eighth aspect of the present invention there is provided a database comprising a plurality of data entries relating to user devices capable of communicating in a communications network, wherein each entry comprises; information necessary to establish a communication with a user device via the communications network; and information relating to the number of communication events occurring with the user device across the communications network.

### Brief Description of Drawings

For a better understanding of the present invention and to show how the same may be carried into effect, embodiments of the present invention will now be described with reference to the following drawings:
Figure 1 is a schematic representation of a peer to peer communication system in accordance with an embodiment of the present invention;
Figure 2 shows a client stack;
Figure 3 shows a page displayed by the client user interface in accordance with an embodiment of the present invention;
Figure 4 shows a page displayed by the client user interface in accordance with an embodiment of the present invention;
Figure 5 shows a page displayed by the client user interface in accordance with an embodiment of the present invention;
Figure 6 shows a page displayed by the client user interface in accordance with an embodiment of the present invention;
Figure 7 shows a page displayed by the client user interface in accordance with an embodiment of the present invention;
Figure 8 shows a page displayed by the client user interface in accordance with an embodiment of the present invention;
Figure 9 shows a page displayed by the client user interface in accordance with an embodiment of the present invention;
Figure 10 shows a page displayed by the client user interface in accordance with an embodiment of the present invention;
Figure 11 shows an arrangement for measuring call statistics in accordance with an embodiment of the present invention.

### Detailed Description

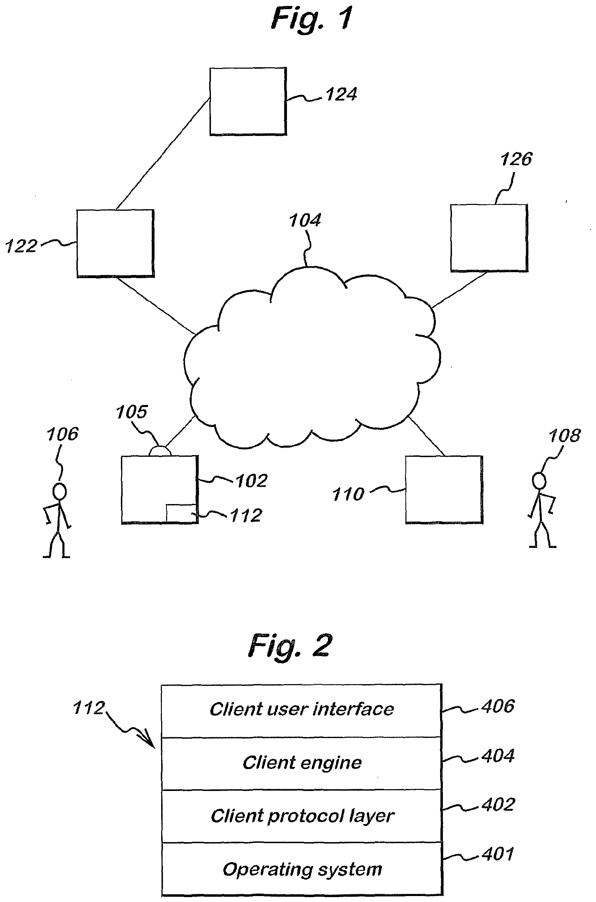

Reference will first be made to Figure 1, in which is shown a communication system 100, including a packet switched network such as a peer to peer network 104 such as the internet. The communication system may also include a circuit switched networks such as PSTN (Public Switched Telephone Networks) (not sown). It should be appreciated that even though the exemplifying communications network shown and described in more detail uses peer to peer and PSTN networks, embodiments of the present invention can be used in any other suitable form of network.

A user device 102 is shown connected to the peer to peer network 104. The user device 102 may be, for example, a personal computer, a gaming device, a personal digital assistant, a suitably enabled mobile phone or other device able to connect to the network 104. The user device has a user interface means to receive information from and output information to a user of the device. In a preferred embodiment of the invention the interface means of the user device comprises a display means such as a screen and a keyboard or mouse. The user device 102 is connected to the network 104 via a network port 105, and may be via a cable (wired) connection or a wireless connection. The network 104 may be a network such as the Internet.

In accordance with an embodiment of the invention the network communication system includes a data store 126 that stores data relating to a called party. In one embodiment of the invention the data store 126 may be provided on at least one server.

If the user device is connected to the network 104, then it may be running a client program 112 provided by the operator of the peer-to-peer system. The client 112 is a software program executed on a local processor in the user device 102. The client 112 has a number of different components or layers for implementing various functions, including a protocol layer 402 (Figure 2) for managing the network interface.

Also connected to the network 104 are a backend server 122 and a web application 124. The backend server 122 and the web application 124 may be located within the private network 128 of the operator of the communication system. The backend server 122 and the web application 124 may be geographically co-located, or may be geographically separated. The backend server 122 is located between the web application 124 and the network 104, and is responsible for exchanging messages between the web application 124 and the client 112. The backend server is also responsible for storing a contact list for the client that includes a list of other users of the network that the client 112 has previously stored as contacts. The backend server 122 and the client software may communication using a protocol described in our UK Application Number 0608752.2.

Figure 2 shows a protocol stack for the client 112 according to an embodiment of the present invention. The protocol stack shows an operating system layer 401, a protocol layer 402, a client engine layer 404 and a client user interface layer 406. Each layer is responsible for specific functions. Because each layer usually communicates with two other layers, they are regarded as being arranged in a stack as shown in figure 2. The operating system layer 401 manages the hardware resources of the computer and handles data being transmitted to and from the network. The client protocol layer 402 of the client software communicates with the operating system 401. Processes requiring higher level processing are passed to the client engine layer 404. The client engine 404 also communicates with the user client user interface layer 406. The client engine may be arranged to control the client user interface layer 406 to present information to the user via the user interface means and to receive information from the user via the user interface means. The control of the client user interface 406 will be explained in more detail hereinafter.

A calling user 106 of the user device 102 can communicate with a called user 108 of a user device 110 across the network 104. In one embodiment of the invention the client interface is arranged to display a page, on a display provided by the user interface means of the user device 102, to enable the user to initiate the communication. The page may list pre stored call data for a plurality of users, otherwise referred to as a list of contacts that correspond to the contact list stored on the backend server 122. To initiate the communication, the calling user 106 can click on the contact listed for the user 108. Alternatively the calling user 106 can input an identity for the called user, such as a telephone number for the user device 110, or a username for the user 108 into the user device 102, using either a keyboard or a mouse to select alphanumeric buttons displayed on the screen. The client then sets up the call to the called user 108. The call may be made using VoIP, in accordance with methods known in the art, such as disclosed in WO 2005/009019. The communication may comprise voice, video, instant messaging ("IM"), short message service (SMS) or a combination thereof.

Figure 1 shows the called user device 110 connected directly to the peer to peer network 104. In an alternative embodiment the called user device 110 may be connected to a different network such as the public switched telephone network ("PSTN") or a mobile network (not shown in Figure 1). If connected to the PSTN, the called user device 110 may be a fixed line telephone, and if connected to a mobile network, the called user device 110 may be a mobile telephone.

The communication between the calling user device 102 and the called user device 110 may be terminated by either the calling user 106 or the called user 108. If the call is terminated by the called user of the user device 110, the client protocol layer 402 of the client running on the calling user device 102 receives notification from the network that the call has been terminated and controls the client engine 404 accordingly. Conversely if the calling user of the user device 102 terminates the call, the client engine 404 of the client running on the calling user device 102 may receive an instruction from the client user interface 406 to terminate the call and will control the client protocol layer 402 to terminate the network connection.

When a call is terminated, the client engine 404 controls the client user interface 406 to display a notification to the calling user that the call is terminated. The notification may include a timer indicating the duration of the call.

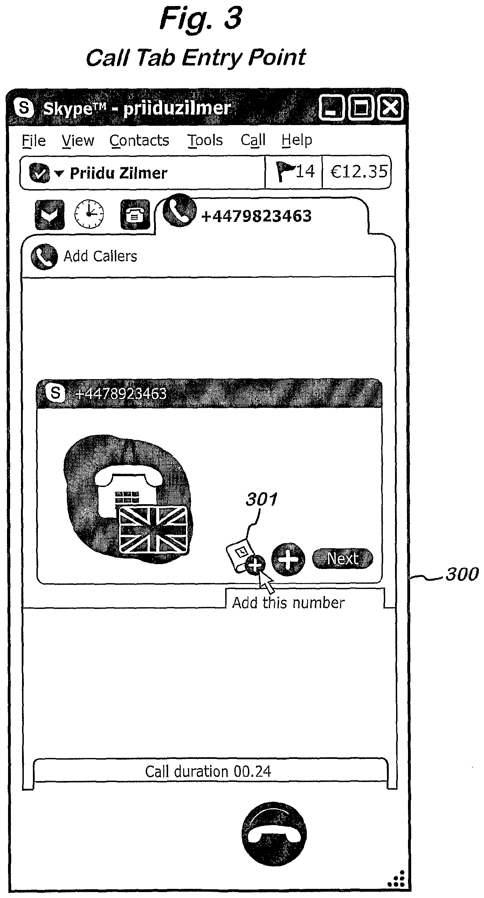

In accordance with an embodiment of the invention the client engine may also be arranged to control the client user interface to display a selectable option that allows the calling user to save the details of the called user 108 on the data store 126 when the call is terminated. The page 300 as shown in Figure 3, described hereinafter, is one example of how the client user interface may display a selectable option that allows the calling user to save the details of the called user.

In an alternative embodiment of the invention the client engine may be arranged to control the client user interface to allow the calling user 106 to save the details of the called user 108 that he is in communication with during the call. In this embodiment of the invention the client user interface may prompt the calling user to input details relating to the called user 108, immediately after connection or a predetermined time after connection.

In a further alternative embodiment of the invention, the client user interface may be arranged to allow the user to input details of another user to be saved on the data store 126 at anytime.

In accordance with an embodiment of the present invention the details of the called user will include the information necessary to establish a connection via the communication system 100 with the called user device 110. The details may also include the postal address of the called user. The information required to contact the called user will hereinafter be referred to as the contact details of the user.

Figure 3 shows a page 300 that may be displayed on a display screen of the user device 102 by the client user interface when the call has been terminated according to a preferred embodiment of the present invention.

Pages displayed on the display screen may be implemented, for example, using HTML (Hyper Text Markup Language) or code that is specific to the client software 112.

The page 300 displays the identity of the called user 108, such as the telephone number of the called user device 110. According to an embodiment of the invention the client user interface is also arranged to provide a means for storing the called user data in the data store 126. In a preferred embodiment of the invention the page 300 displays a selectable link 301 that the user may select to indicate to the client software that the called user information should be stored to the data store 126.

In an alternative embodiment of the invention the calling user may select a key on a keyboard or other alternative input device, in order to indicate to the client software that the called user data should be stored on the data store 126.

In one embodiment of the invention the client 112 may be arranged detect a language setting preset by the user, and to only provide means for allowing a user to store called user information on the data store if the language is set to an admissible language. In one embodiment an admissible language is one that uses the Roman alphabet.

When the calling user selects the link 301 the client engine 404 may control the client user interface 406 to allow the details relating to the user 108 to be input. In accordance with an embodiment of the invention, contact information used to establish the call between user device 102 and user device 110 may be stored in a local memory of the user device 102. When the user selects the link 301 to indicate that the called user details are to be saved, the client 112 is arranged to retrieve the contact information from the memory so that the user is not required to manually enter the information again.

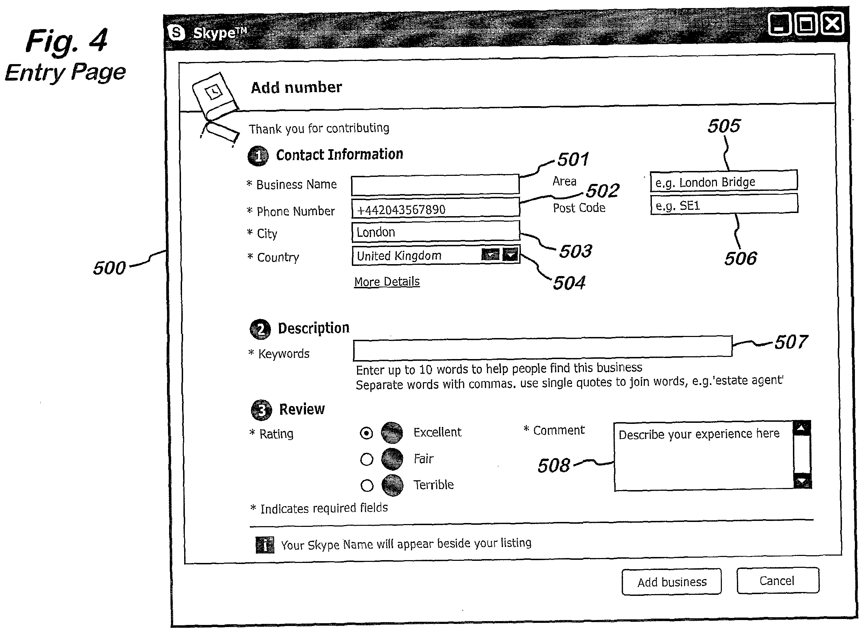

Figure 4 shows a page 500 that may be displayed by the client user interface 406 in order to save information relating to the user 108 when the user 106 selects the link 301. As shown in Figure 4, the screen includes data fields 501-506 for entering information relating to the user 108.

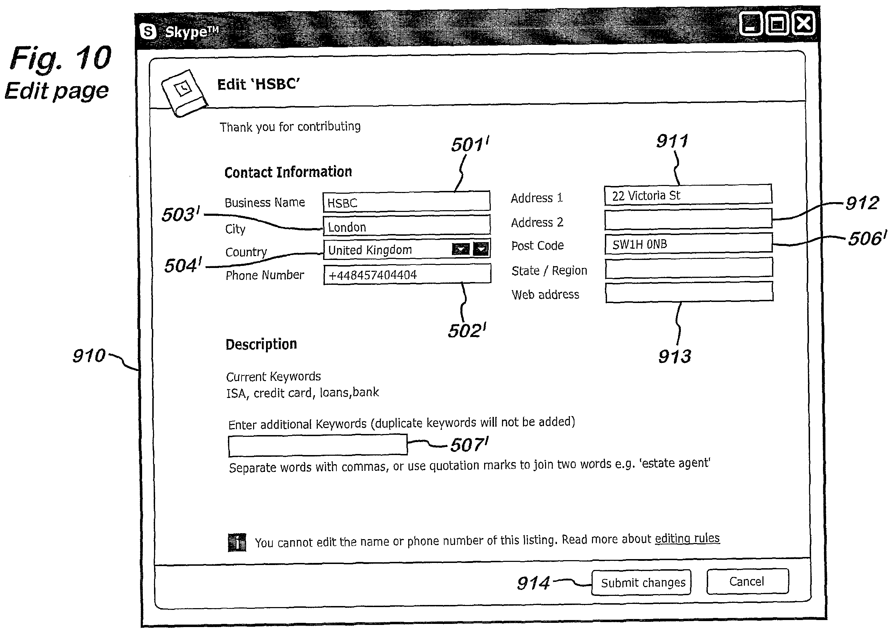

In one embodiment of the invention the client 112 is arranged to search the data store 126 with the details of the user 108 to see if an entry already exists for the user 108. The client engine 404 may control the client user interface 406 to only display page 500 if the details of the user 108 are not already present on the data store 126. If the details of the user 108 are already present on the data store, the client may be arranged to display an edit page 910 as shown in Figure 10. The edit page will be described in detail hereinafter. In an alternative embodiment, if the client 112 determines that the user details are already stored on the data store 126 the client interface 406 may be arranged to display a page indicating that the listing already exists.

In accordance with an embodiment of the invention, the client user interface 406 is controlled by the client 404 engine to populate some of the data fields with the contact information stored in the local memory of the user device 102. For example the phone number data field 502 may be populated by the client 112 from the contact details stored in the local memory of the user device. The country data field 504 may also be populated by the client 112 using information which may be determined from the contact information stored in the local memory of the device 102 when the call was initiated. In one embodiment the client 112 may be arranged to recognise the country code prefix of the telephone number. Such an arrangement is disclosed in our US Application No. 11/416378.

The user 106 may add further information to the information already added to the data fields by the client 112. For example, the user may add a business name to the business name data field 501. The user may also delete information or edit information in a data field already populated by the client.

In an alternative embodiment of the invention the data fields populated by the client cannot be deleted by the user 106.

In one embodiment of the invention the user 106 may also add other information to be stored on the data store 126 in addition to contact information. For example the user may add keywords in a keyword data field. The stored keywords may indicate the contact type, e.g. hairdressers, and can be used as searching criteria when searching information stored in the data store 126.

In a further embodiment of the invention the user may input a rating to the contact information to be stored in the data store 126. For example, if the contact information relates to a business the user may rate the quality of the service offered by the business. In one embodiment the rating may be given in the form of a percentage, 100% being a very good rating and 0% being a very poor rating. In an alternative embodiment of the invention the user may select a rating from rating options, for example the user may select one of excellent, very good, fair or poor. The rating information may then be stored with the contact details of the business and displayed with the contact details when the details for the business are retrieved from the data store 126.

In one embodiment of the invention the user is required to specify a rating before the contact information can be stored in the data store 126.

In a further embodiment of the invention the user 106 may also include a comment to be displayed with the contact information when the contact information is retrieved from the data store 126. The user may type a comment in the comment data field 508.

In accordance with a further embodiment of the invention the client user interface may also be controlled to allow a user to search for an entry in the data store 126.

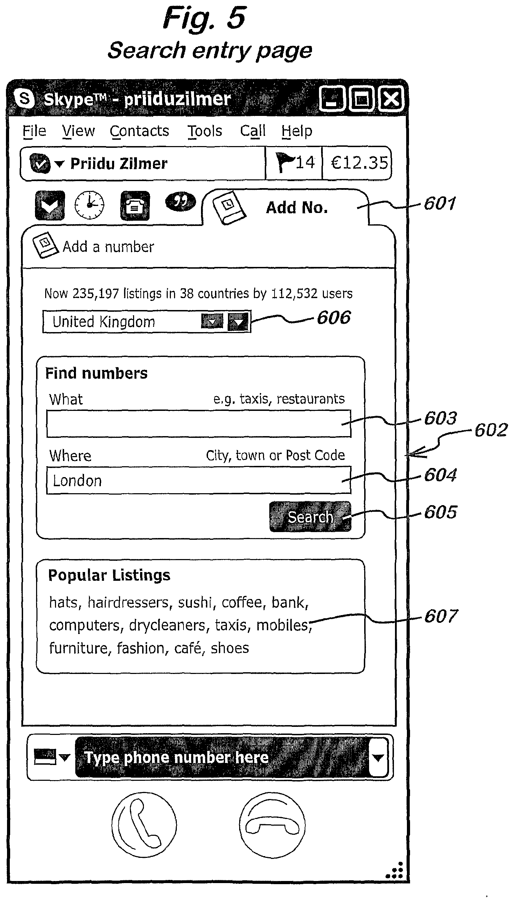

A user may access a search entry page by selecting a search tab 601 (Figure 5), selectable link or button provided by the client user interface. In response to the user selecting the search tab 601, the client engine 404 is arranged to control the client user interface to display a search entry page 602 as shown in Figure 5.

A user may search the data store by searching for a type of contact in a particular location. The user may input the type of contact information required, for example 'hairdressers' into a contact type data field 603 in the search entry page 602. The contact type information entered in field 603 may be used to search the keywords stored on the database. The user may also input the required location, for example 'London' into the location data entry field 604. The user may then select a search button 605 to submit the information input in fields 603 and 604 to search the data store 126.

The search entry page may also be provided with a country data field 606. A default country may appear in the country data field 606 when the search entry page is displayed. The default country may be set as the country in which the user is located. This information may be preset by the user as part of the user profile information. The user may enter a different country in the country data field either manually or by selecting a country from a drop down menu.

The search entry page may also include a list of popular keywords that are stored on the data store 126. The popular keywords may be displayed as selectable links in field 607. In one embodiment of the invention the popular keywords displayed are popular keywords that are stored on the data store 126 for the country identified in the country data field 606.

In one embodiment of the invention the client application is arranged to search the data store 126 for a list of the keywords that are associated with the greatest number of entries for the identified country and to display the results to the search in the field 607 as selectable links.

In an alternative embodiment of the invention the client may be arranged to search the data store for a list of keywords that are associated with the most called entries for the identified countries and to display the results to the search in the field 607.

The user may search the data store by either selecting a keyword in the field 607 or by selecting the search button 605 to search the data store using the information input into data fields 603 and 604. When the user searches the data store by selecting a keyword displayed as a link, any information entered in data fields 603 and 604 may be ignored.

When the user submits information to search the data store 126 by for example selecting the search button 605 as described above, the client engine may be arranged to generate a search data store message in response to the users request to search the data store. The search data store message includes the contact information entered by the user in contact fields 603 and 604. The client protocol layer is then arranged to transmit the search data store message to the data store 126 via the network 104.

According to one embodiment of the invention, before the contact information is sent in the search data store message, the text of the content information input by the user in data fields 603 and 604 may be spell checked to ensure that the data store is searched using information that is spelt correctly. The spell checker may be implemented as an application running on the user device. The spell checker application may be arranged to detect the language setting of the client software installed on the computer in order to search for the correct spelling in the language setting of the client software.

The data store 126 is searched using the content information included in the search data store message sent from the user device. The search data store message also includes details of the user that transmitted the message. In one embodiment of the invention the user details transmitted in the search data store message are limited to details that facilitate the search results to be returned to the user that sent the search data store message. These details may include a telephone number of the user device or the user ID of the user. In an alternative embodiment of the invention the message may include user profile information such as the age or gender of the user. This information may be used to enhance the searching criteria for searching the database. For example the results of the search may be limited to content uploaded by users in the same age group.

The entries searched on the data store 1260 may be limited to entries matching the location input in the location data entry field. The entries stored on the data store 126 with content matching the content information provided in the search data store message are retrieved from the data store 126 and sent via the network 104 to the user device 102.

When the client engine receives the information from the data store 126, the client engine is arranged to control the client user interface to display the entries. The entries may be displayed on a results page.

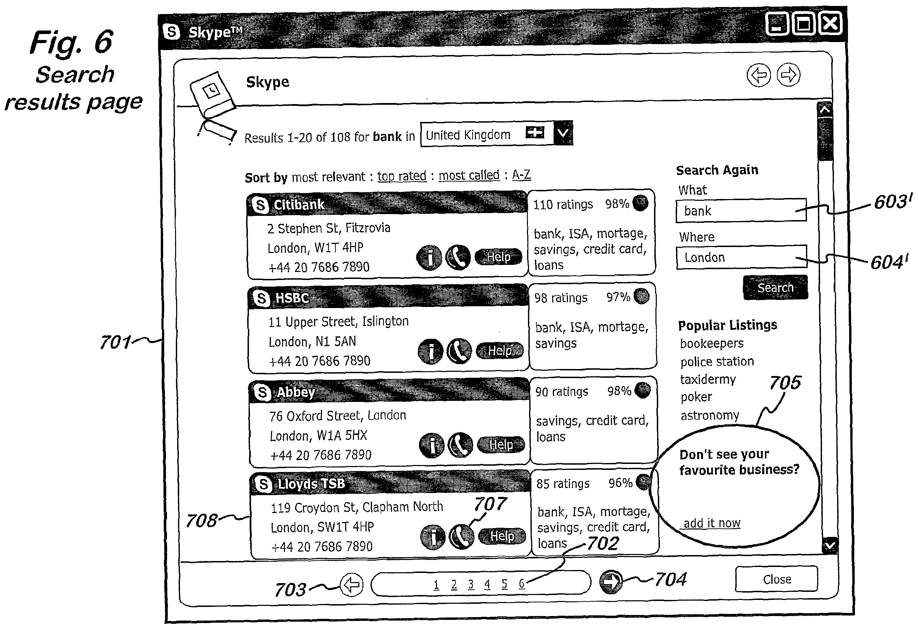

Figure 6 shows a results page 701 according to an embodiment of the present invention. In one embodiment of the invention only some of the entries received from the data store are displayed. The contact details for each entry displayed on the results page may be stored on a local memory of the user device 102. The user may select further entries by either selecting a page number 702 linked to additional results pages arranged to display further entries. Alternatively the user may scroll through the results pages using the left and right arrow buttons 703 and 704.

In a preferred embodiment of the invention the data store is arranged to sort the results into a particular order before the results are returned to the user device 102.

In one embodiment of the invention the results may be sorted by the relevance of the searching criteria. In this embodiment of the invention the results are sorted in order of the number of keywords stored for an entry that match the keywords entered in the content type data field 603 on the search entry page.

In an alternative embodiment of the invention the results may be sorted by order of the user ratings. In one embodiment the results may be sorted by the highest average user rating. In an alternative embodiment the results may be sorted in order of the entries having the highest percentage of 'excellent' ratings.

In another embodiment of the invention the results may be sorted such that the name of each contact is listed alphabetically.

In a further embodiment of the invention the results may be sorted by order of the number of calls logged to the user identified in each result.

In a further embodiment of the invention the results may be sorted according to how close the location specified in the contact details of an entry is to the location specified in the search as entered in the location data entry field.

In a further embodiment of the invention the results may be sorted according to whether a user specified in the contact details of an entry has requested to be listed above other entries in the search results. In one embodiment of the invention the network operator associated with the data store 126 may approach users specified in the entries stored on the data store to offer the user this option. A user may then pay to ensure that they are listed above other entries in the search results. According to this embodiment of the invention the data store may be arranged to store an indication that a user has requested to be listed above other entries in the search results. The search results may be sorted such that users that have requested to be listed in the search results appear at the top of the results list above any users that have not requested this option. In a further embodiment of the invention, the results may be sorted in order of how much the user has paid to be listed.

According to a further embodiment of the present invention the results may be ordered according to which of the entries have been created or commented on by users listed in a user's contact list. According to this embodiment of the invention, the entries that have been created or commented on by users included in the user's contact list appear at the top of the results list. According to one embodiment of the invention, the results from the data store 126 are sent to the user device 102 via the backend server 122. The contact list for the user is stored on the backend server. The backend server is arranged to compare the search results to the user's contact list. If the server 122 determines that there are entries that have been either created or commented on by the any of the users listed in the user's contact list, the server orders the results such that those entries appear at the top of the results list. The search results are then forwarded to the user device.

In alternative embodiment of the present invention the client 122 may be arranged to determine if there are any results that have been either created or commented on by the any of the users listed in the user's 106 contact list and to sort the results accordingly.

In a further alternative embodiment of the invention details of the user's contact list may be included in the content information provided in the search data store message. The results retrieved from the data store 126 may then only include results created or commented on by users listed in the user's 106 contact list.

In a further embodiment of the invention the search results may be ordered according to any combination of the above identified criteria. For example the location criteria may be combined with the call volume criteria, such that the results found for a particular location are listed in order of the most called entries.

This list is not exhaustive and is only intended as an example.

In an embodiment of the invention the user may select the criteria for ordering the results of the data store search.

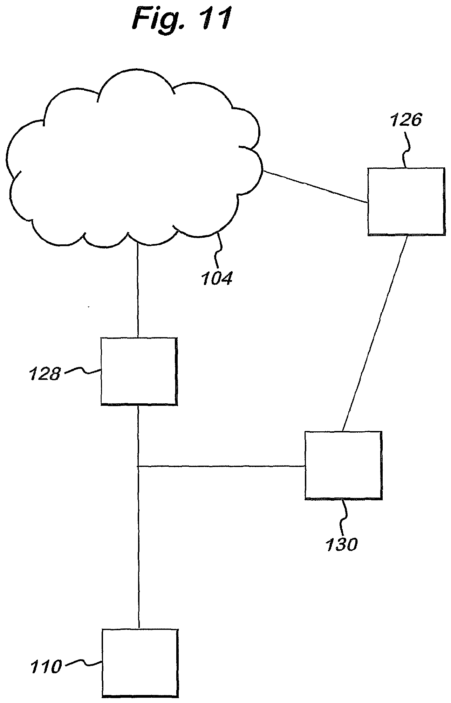

In one embodiment of the invention, call statistics are monitored for each entry on the data store so that the data store may sort the results of a data store search by order of the most called. Call statistics may be collected by a Call Data Collector 130 (see figure 11). The Call Data Collector may form part of the data store 126. Alternatively the Call Data Collector 130 may be positioned at a separate location in the network to the data store 126. In one embodiment of the invention the call statistics relate to the number of communication events, such as voice calls or text communications, occurring for a particular user device. In another embodiment of the invention the call statistics may also include information relating to the duration of a communication, for example the duration of a voice call.

Figure 11 shows the called user device 110 connected to a gateway 128. In this embodiment of the invention the user device 110 is connected to a separate network from the network 104. For example the user device 110 may be connected to a PSTN network. The gateway 128 enables the communication to be established between the network 104 and the network in which the user device 110 is located.

The call data collector 130 is arranged to count the number of communication events, such as calls, that occur for each user stored on the data store 126. The call statistics for each user listed on the data store are periodically sent to the data store 126 from the call data collector 130. On receipt of information transmitted from the call data collector 130, the data store 126 updates the entry for the called user with the call statistics.

In one embodiment of the invention the call data collector 130 includes a memory for storing a list of each called user device stored on the data store 126. The data store 126 transmits entry updates to the call data collector 130. The data store may transmit entry updates to the call data collector 130 each time an entry relating to a new called user is created, or at periodic intervals.

In one embodiment of the invention the call data collector 130 is arranged to count the number of calls made to a particular user device by counting the number of call data records (CDRs) that are generated for that user device. CDRs are records that are generated upon each calling event to facilitate charging in a communication network. CDRs are known in the art and will therefore not be described further herein.

In one embodiment of the invention the call data collector 130 analyses each CDR that is transmitted from the gateway 128 and checks its memory to identify if the CDR relates to a call made to a user device that is stored on the data store. If the CDR relates to a user device that is stored on the data store the call data collector increments the count for the number of calls to that number by 1.

In an embodiment of the invention only calls having duration above a predetermined time threshold are counted. In one embodiment only calls lasting 10 seconds or longer are counted.

In a further embodiment of the invention, calls from the same user to a number listed on the data store may only be counted once during a predetermined period. In one embodiment this period is 24hrs.

In a further embodiment of the invention a plurality of call data collectors may be connected to the data store 126. In an embodiment of the invention all calls made from network 104 are monitored.

According to an embodiment of the invention the results page 701 may allow the user to search the data store again with a new criteria. Therefore the results page may also include a content type data field 603' and a location data field 604.

When the results of the search are displayed, the client interface is arranged to allow the user to establish a communication with one of the called users listed in the results page. In a preferred embodiment of the invention the communication is a voice call. In alternative embodiments of the invention the communication may be a text message, instant message or another type of communication. In one embodiment of the invention the user may establish a call by selecting a call button 707 provided in relation to an entry 708 as shown in Figure 6. On the selection of a call button 707 the client is arranged to establish a call with the contact 708 associated with the call button 707 using the contact details retrieved from the data store 126.

In one embodiment the user may store the contact details of an entry listed on the results page as a contact. If client interface receives a signal from the user to indicate that the contact details of a particular entry are to be stored as a contact the client js arranged to copy the contact details for that particular entry into a permanent memory store such as a ROM (read only memory) local to the user device 102.

The user may access the contact information entry page 500 from the results page by selecting a link 705 on the search results page 701. The user may decide to add new called user details when it is apparent that an expected contact, for example the user's favourite business, does not appear in the search results.

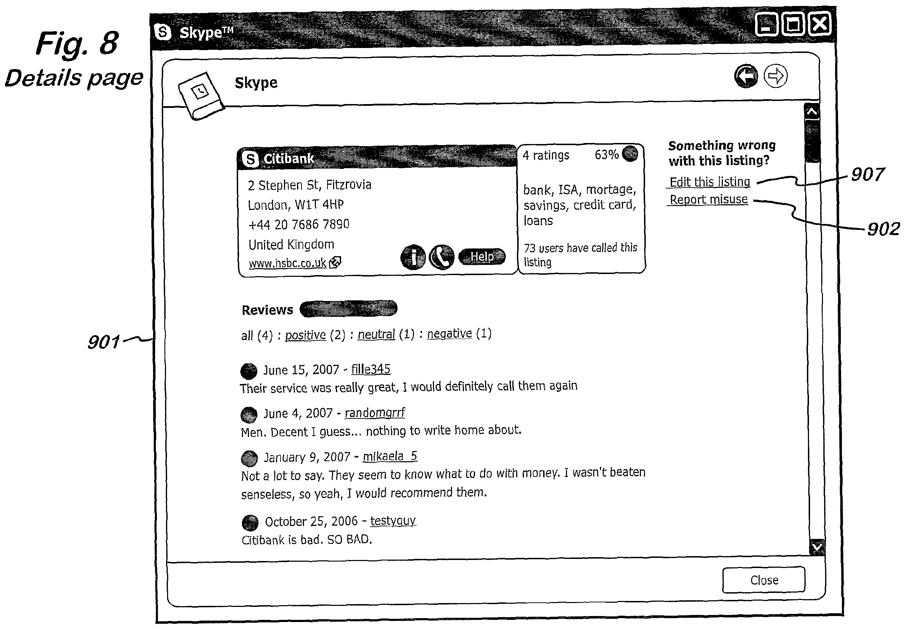

The user may access a details page for each entry displayed on the results page 701. The details page may be viewed by selecting a details link for a particular entry on the search results page. When the link is selected the client is arranged to retrieve details information for a particular entry from the data store 126. Figure 8 shows an example of a details page 901 for a particular entry. The details page 901 may show the comments provided by other users that have previously called the contact.

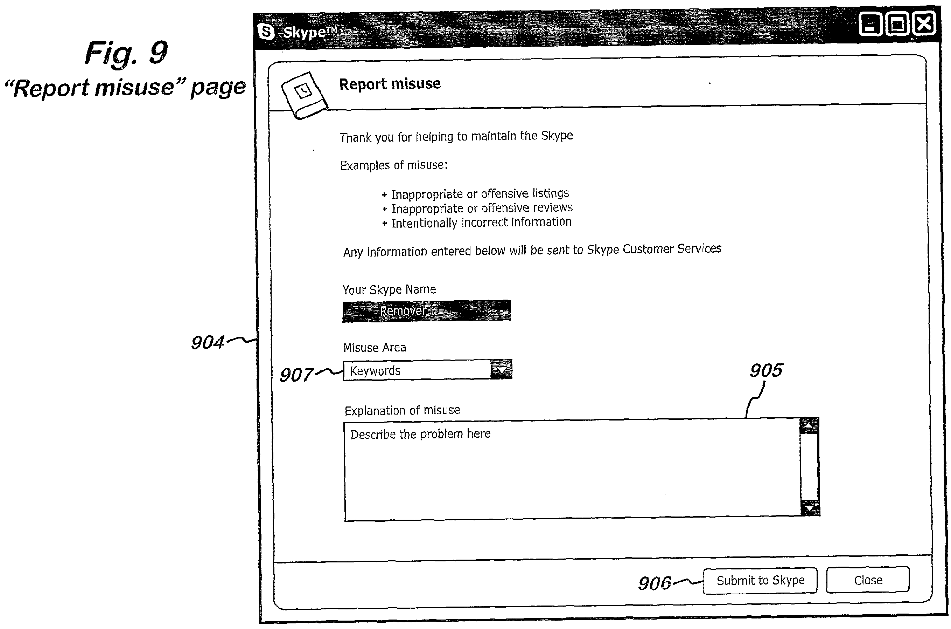

In one embodiment of the invention the client user interface may provide the user with means for reporting any misuse of the data store 126 such as the storage of abusive comments or misleading information. As shown in Figure 8 the details page 901 may include a selectable link 902 to allow the user to report any misuse of the data store. The user may select link 902 to access a page to allow the user to input any comments relating to the misuse. A 'report misuse' page 904 is shown in Figure 9. As shown, the user may input a description of the misuse in field 905. Alternatively or additionally the user may indicate the reason for the misuse using the data field 907 that is populated using a drop down menu. The user may then submit the description to the operator by selecting a submit button 906. When the user selects the submit button 906, information included in the data fields on page 904 may be sent to customer services in a message.

In another embodiment of the invention the client user interface may provide the user with means for editing the information stored in relation to an entry on the data store 126. The details page 901 shown in figure 8 may include a selectable link 907 to allow the user to modify the information shown on the details page 901. The user may select the link 907 to access an editing page 910 shown in Figure 10.

The editing page 910 includes data fields for updating the contact information for the selected entry on the data store 126. The data fields may include a business name data field 501', a telephone number data field 502' and location data fields 503', 504', 911, 912, 506'.

In a preferred embodiment of the invention, when the user accesses the edit page 910 the data fields are populated with the data currently stored on the data store. The user may then edit the information in the data field.

In another embodiment of the invention the user may not edit the information in the business name data field 501' or in the phone number data field 502'. This prevents fraudulent use of the editing feature.

The editing page 910 may also be provided with a keyword data field 507' for entering additional keywords.

Once the user has edited the information in the data fields the data may be sent to the data store to update the entry for that contact by selecting a submit button 914 provided on the editing page 910.

if the data store 126 does not contain any entries that match the searching criteria entered by the user in the content type data field 603, 603', and the location data field 604, 604', the data store may send a response to the client engine indicating that the search criteria did not match any listings. On receipt of this notification the client engine may control the client user interface to display a notification to the user that no results were found.

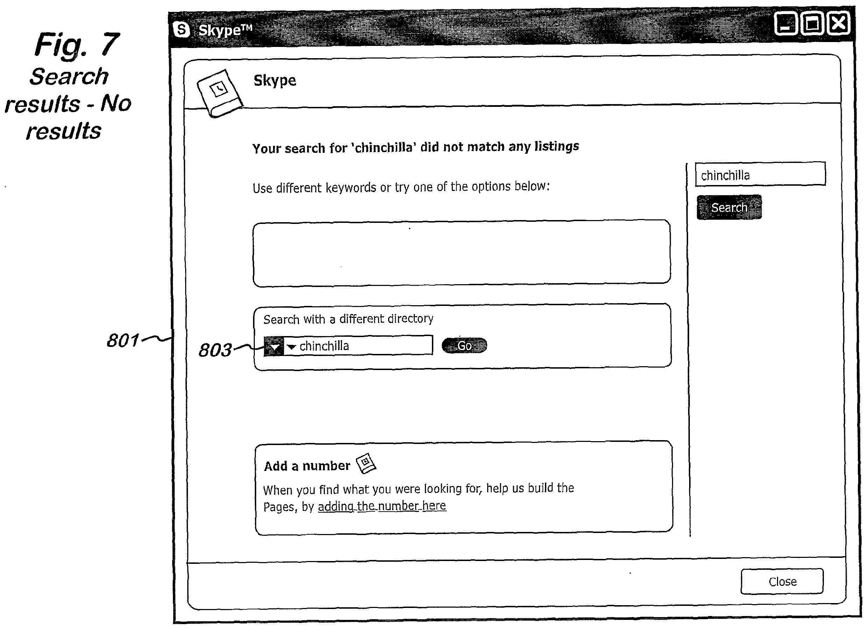

Figure 7 shows an example of a page 801 displayed by the client user interface 406 when no results match the searching criteria.

The client user interface may be arranged provide the user with the option of searching an alternative data store provided by an authorised data store provider. A data field 803 is shown on the page 801 to allow the user to input a term to search another data store. According to an embodiment of the invention the client 112 may be arranged to populate the search data field 803 with the search terms previously input by the user on the search entry page 602.

While this invention has been particularly shown and described with reference to preferred embodiments, it will be understood to those skilled in the art that various changes in form and detail may be made without departing from the scope of the invention as defined by appended claims.

According to one aspect of the invention there may be provided a method of storing information relating to a plurality of user devices capable of communicating in a communications network on a store, the method comprising; inputting to the store information necessary to establish communication with the plurality of user devices via the communications network; generating call statistics relating to the number of communication events occurring with the plurality of user device across the communications network; inputting to the store information relating to the call statistics for the plurality of user devices.

The information stored in relation to each user device may be stored as an entry in the store.

The method may further comprise the step of retrieving a plurality of entries from the store.

The method may further comprise the step of sorting the entries retrieved from the store in dependence on the number of communication events occurring with each user device.

The communications network may comprise a first network and a second network.

The call statistics may relate to the number of communication events occurring between the first network and the second network.

According to another aspect of the invention there may be provided a database comprising a plurality of data entries relating to user devices capable of communicating in a communications network, wherein each entry comprises; information necessary to establish a communication with a user device via the communications network; and information relating to the number of communication events occurring with the user device across the communications network.

The communications network may comprise a first network and a second network

The number of communication events occurring with the user device across the communications network may relate to the number of communication events occurring between the first network and the second network.

According to another aspect of the present invention there is provided a method of communicating in a communication network using communication information stored on a data store by a plurality of users comprising; inputting searching criteria to search the data store by a first user; retrieving a set of information from the data store corresponding to the searching criteria; determining if any information in the set was stored on the data store by a user associated with the first user; displaying any information that was determined as being updated by a user associated with the first user, to the first user; initiating a communication event by the first user to a second user using the information presented to the first user.

## Claims

1. A method of populating a store (126) with information identifying recipient user devices capable of communicating in a communications network (104), the method comprising:
establishing a communication event from an initiator device (102) to a recipient device (110) via the communication network using information identifying the recipient device;
receiving from a user (106) of the initiator device a selection signal indicating that said information identifying the recipient device is to populate the store, wherein the store stores the information identifying the recipient device together with associated information, and wherein the information identifying the recipient and the associated information are stored as an entry in the store;
**characterised in** the method further comprises:
transmitting said information identifying the recipient device from the initiator device to the store via the communication network, wherein each entry in the store is editable by a plurality of users having searched for the entry in the store.

2. A method as claimed in claim 1 wherein the user of the initiator device inputs the associated information at the initiator device.

3. A method as claimed in claim 1 wherein the associated information is provided from a database located in the communications network.

4. A method as claimed in claim 3 wherein the database counts the number of communication events occurring across the communications network for a recipient device.

5. A method as claimed in claim 1 wherein the user of the initiator device inputs the information identifying the recipient device at the initiator device in order to establish a call.

6. A method as claimed in claims 1 or 2 wherein the associated information is transmitted to the store together with the information identifying the recipient device.

7. A method as claimed in claim 1 wherein the associated information includes one of: rating information, location information, call statistics, payment information, and information relating to the number of times a call is made to a recipient device.

8. A method as claimed in claim 1 wherein the associated information includes an indication of whether one entry is to be listed above other entries.

9. A method as claimed in claim 1 wherein the information identifying the recipient comprises a telephone number.

10. A method as claimed in claim 1 further comprising controlling the initiator device to provide the user with means for generating the selection signal when the communication event to the recipient device is terminated.

11. A method as claimed in claim 1 further comprising controlling the initiator device to provide the user with means for generating the selection signal during the communication event.

12. A method as claimed in claim 1 further comprising the steps of detecting a language setting stored on the initiator device;
determining if the language setting is a permissible language providing the user with means for generating the selection signal if it is determined that the language setting is a permissible language.

13. A method as claimed in claim 1, wherein the associated information includes information relating to the number of times a call is made to a recipient device, and wherein the information relating to the number of times a call is made to a recipient device is determined by counting the number of call data records issued in the network relating to the recipient device.

14. An initiator device (102) arranged to initiate a communication event to a recipient device (110) in a communication network (104) comprising;
input means for inputting information identifying the recipient device to initiate the communication event;
receiving means arranged to receive from the user (106) of the initiator device a selection signal indicating that the information identifying the recipient device is to populate the store (126), wherein the store stores the information identifying the recipient device together with associated information, and wherein the information identifying the recipient and the associated information are stored as an entry in the store;
**characterised in that** the recipient device further comprising:
transmitting means arranged to transmit said information identifying the recipient device to the store via the communication network, wherein each entry in the store is editable by a plurality of users having searched for the entry in the store.

15. A computer program product comprising program code means which when executed on an initiator device implement the steps of;
establishing a communication event from the initiator device (102) to a recipient device (110) via the communication network (104) using information identifying the recipient device;
receiving from a user (106) of the initiator device a selection signal indicating that said information identifying the recipient device is to populate a store (126), wherein the store stores the information identifying the recipient device together with associated information, and wherein the information identifying the recipient and the associated information are stored as an entry in the store;
**characterised in that** the program code means further implement the step of:
transmitting said information identifying the recipient device from the initiator device to the store via the communication network, wherein each entry in the store is editable by a plurality of users having searched for the entry in the store.

## Patentansprüche

1. Verfahren zum Populieren eines Speichers (126) mit Informationen, die Empfängerbenutzervorrichtungen identifizieren, die in einem Kommunikationsnetzwerk (104) kommunizieren können, wobei das Verfahren Folgendes umfasst:
Aufbauen eines Kommunikationsereignisses von einer Initiatorvorrichtung (102) an eine Empfängervorrichtung (110) mittels des Kommunikationsnetzwerks unter Verwendung von Informationen, die die Empfängervorrichtung identifizieren;
Empfangen eines Auswahlsignals von einem Benutzer (106) der Initiatorvorrichtung, das darauf hinweist, dass die Informationen, die die Empfängervorrichtung identifizieren, sind, den Speicher zu populieren, wobei der Speicher die Informationen, die die Empfängervorrichtung identifizieren, zusammen mit assoziierten Informationen speichert und wobei die Informationen, die den Empfänger identifizieren, und die assoziierten Informationen als ein Eintrag in dem Speicher gespeichert werden;
**dadurch gekennzeichnet, dass** das Verfahren weiterhin Folgendes umfasst:
Übertragen der Informationen, die die Empfängervorrichtung identifizieren, von der Initiatorvorrichtung an den Speicher mittels des Kommunikationsnetzwerks, wobei jeder Eintrag in dem Speicher durch mehrere Benutzer bearbeitbar ist, die nach dem Eintrag in dem Speicher gesucht haben.

2. Verfahren nach Anspruch 1, wobei der Benutzer der Initiatorvorrichtung die assoziierten Informationen an der Initiatorvorrichtung eingibt.

3. Verfahren nach Anspruch 1, wobei die assoziierten Informationen von einer Datenbank bereitgestellt werden, die sich in dem Kommunikationsnetzwerk befindet.

4. Verfahren nach Anspruch 3, wobei die Datenbank die Anzahl von Kommunikationsereignissen zählt, die über das Kommunikationsnetzwerk für eine Empfängervorrichtung auftreten.

5. Verfahren nach Anspruch 1, wobei der Benutzer der Initiatorvorrichtung die Informationen, die die Empfängervorrichtung identifizieren, an der Initiatorvorrichtung eingibt, um einen Anruf aufzubauen.

6. Verfahren nach Anspruch 1 oder 2, wobei die assoziierten Informationen an den Speicher zusammen mit den Informationen, die die Empfängervorrichtung identifizieren, übertragen werden.

7. Verfahren nach Anspruch 1, wobei die assoziierten Informationen eine der folgenden beinhalten: Bemessungsinformationen, Lokationsinformationen, Anrufstatistiken, Zahlungsinformationen und Informationen in Bezug auf die Anzahl, die ein Anruf an eine Empfängervorrichtung vorgenommen wird.

8. Verfahren nach Anspruch 1, wobei die assoziierten Informationen einen Hinweis darauf beinhalten, ob ein Eintrag über anderen Einträgen aufgelistet werden soll.

9. Verfahren nach Anspruch 1, wobei die Informationen, die den Empfänger identifizieren, eine Telefonnummer umfassen.

10. Verfahren nach Anspruch 1, das weiterhin das Steuern der Initiatorvorrichtung umfassen, um dem Benutzer Mittel zum Erzeugen des Auswahlsignals bereitzustellen, wenn das Kommunikationsereignis an die Empfängervorrichtung beendet wird.

11. Verfahren nach Anspruch 1, das weiterhin das Steuern der Initiatorvorrichtung umfassen, um dem Benutzer Mittel zum Erzeugen des Auswahlsignals während des Kommunikationsereignisses bereitzustellen.

12. Verfahren nach Anspruch 1, das weiterhin die folgenden Schritte umfasst:
Erfassen einer Spracheinstellung, die auf der Initiatorvorrichtung gespeichert ist;
Bestimmen, ob die Spracheinstellung eine zulässige Sprache ist;
Bereitstellen von Mitteln zum Erzeugen des Auswahlsignals an den Benutzer, wenn bestimmt wird, dass die Spracheinstellung eine zulässige Sprache ist.

13. Verfahren nach Anspruch 1, wobei die assoziierten Informationen Informationen in Bezug auf die Anzahl, die ein Anruf an eine Empfängervorrichtung vorgenommen wird, beinhaltet und wobei die Informationen in Bezug auf die Anzahl, die ein Anruf an eine Empfängervorrichtung vorgenommen wird, durch Zählen der Anzahl von Anrufdatensätzen, die in dem Netzwerk in Bezug auf die Empfängervorrichtung ausgegeben werden, bestimmt wird.

14. Initiatorvorrichtung (102), die dazu eingerichtet ist, ein Kommunikationsereignis an eine Empfängervorrichtung (110) in einem Kommunikationsnetzwerk (104) zu initiieren, wobei die Initiatorvorrichtung Folgendes umfasst:
Eingabemittel zum Eingeben von Informationen, die die Empfängervorrichtung identifizieren, um das Kommunikationsereignis zu initiieren;
Empfangsmittel, die dazu eingerichtet sind, von dem Benutzer (106) der Initiatorvorrichtung en Auswahlsignal zu empfangen, das darauf hinweist, dass die Informationen, die die Empfängervorrichtung identifizieren, sind, den Speicher (126) zu populieren, wobei der Speicher die Informationen, die die Empfängervorrichtung identifizieren, zusammen mit assoziierten Informationen speichert und wobei die Informationen, die den Empfänger identifizieren, und die assoziierten Informationen als ein Eintrag in dem Speicher gespeichert werden;
**dadurch gekennzeichnet, dass** die Empfängervorrichtung weiterhin Folgendes umfasst:
Übertragungsmittel, die dazu eingerichtet sind, die Informationen, die die Empfängervorrichtung identifizieren, an den Speicher mittels des Kommunikationsnetzwerks zu übertragen, wobei jeder Eintrag in dem Speicher durch mehrere Benutzer bearbeitbar ist, die nach dem Eintrag in dem Speicher gesucht haben.

15. Computerprogrammprodukt, das Programmcodemittel umfassen, die bei Ausführung auf einer Initiatorvorrichtung die folgenden Schritte umsetzen:
Aufbauen eines Kommunikationsereignisses von der Initiatorvorrichtung (102) an eine Empfängervorrichtung (110) mittels des Kommunikationsnetzwerks (104) unter Verwendung von Informationen, die die Empfängervorrichtung identifizieren;
Empfangen eines Auswahlsignals von einem Benutzer (106) der Initiatorvorrichtung, das darauf hinweist, dass die Informationen, die die Empfängervorrichtung identifizieren, sind, einen Speicher (126) zu populieren, wobei der Speicher die Informationen, die die Empfängervorrichtung identifizieren, zusammen mit assoziierten Informationen speichert und wobei die Informationen, die den Empfänger identifizieren, und die assoziierten Informationen als ein Eintrag in dem Speicher gespeichert werden;
**dadurch gekennzeichnet, dass** die Programmcodemittel weiterhin den folgenden Schritt umsetzen:
Übertragen der Informationen, die die Empfängervorrichtung identifizieren, von der Initiatorvorrichtung an den Speicher mittels des Kommunikationsnetzwerks, wobei jeder Eintrag in dem Speicher durch mehrere Benutzer bearbeitbar ist, die nach dem Eintrag in dem Speicher gesucht haben.

## Revendications

1. Procédé servant à charger une mémoire (126) par des informations identifiant des dispositifs d'utilisateurs destinataires en mesure de communiquer dans un réseau de communication (104), le procédé comportant les étapes consistant à :
établir un événement de communication en provenance d'un dispositif d'expéditeur (102) à l'attention d'un dispositif de destinataire (110) par le biais du réseau de communication en utilisant des informations identifiant le dispositif de destinataire ;
recevoir en provenance d'un utilisateur (106) du dispositif d'expéditeur un signal de sélection indiquant comme quoi lesdites informations identifiant le dispositif de destinataire ont pour objet de charger la mémoire, dans lequel la mémoire stocke les informations identifiant le dispositif de destinataire ainsi que des informations associées, et dans lequel les informations identifiant le destinataire et les informations associées sont stockées sous la forme d'une entrée dans la mémoire ;
**caractérisé en ce que** le procédé comporte par ailleurs :
l'étape consistant à transmettre lesdites informations identifiant le dispositif de destinataire en provenance du dispositif d'expéditeur jusque dans la mémoire par le biais du réseau de communication, dans lequel chaque entrée dans la mémoire est modifiable par une pluralité d'utilisateurs ayant cherché l'entrée dans la mémoire.

2. Procédé selon la revendication 1, dans lequel l'utilisateur du dispositif d'expéditeur entre les informations associées au niveau du dispositif d'expéditeur.

3. Procédé selon la revendication 1, dans lequel les informations associées sont fournies en provenance d'une base de données se trouvant dans le réseau de communication.

4. Procédé selon la revendication 3, dans lequel la base de données compte le nombre d'événements de communication se produisant en travers du réseau de communication pour un dispositif de destinataire.

5. Procédé selon la revendication 1, dans lequel l'utilisateur du dispositif d'expéditeur entre les informations identifiant le dispositif de destinataire au niveau du dispositif d'expéditeur en vue d'établir un appel.

6. Procédé selon la revendication 1 ou la revendication 2, dans lequel les informations associées sont transmises jusque dans la mémoire conjointement avec les informations identifiant le dispositif de destinataire.

7. Procédé selon la revendication 1, dans lequel les informations associées comprennent un type d'informations parmi : des informations de tarification, des informations d'emplacements, des statistiques d'appels, des informations de paiement, et des informations se rapportant au nombre de fois qu'un appel est fait à l'attention d'un dispositif de destinataire.

8. Procédé selon la revendication 1, dans lequel les informations associées comprennent une indication si oui ou non une entrée doit être listée au-dessus des autres entrées.

9. Procédé selon la revendication 1, dans lequel les information identifiant le destinataire comportent un numéro de téléphone.

10. Procédé selon la revendication 1, comportant par ailleurs l'étape consistant à commander le dispositif d'expéditeur pour fournir à l'utilisateur un moyen servant à générer le signal de sélection quand l'événement de communication à l'attention du dispositif de destinataire est terminé.

11. Procédé selon la revendication 1, comportant par ailleurs l'étape consistant à commander le dispositif d'expéditeur pour fournir à l'utilisateur un moyen servant à générer le signal de sélection au cours de l'événement de communication.

12. Procédé selon la revendication 1, comportant par ailleurs les étapes consistant à
détecter un paramètre se rapportant à la langue, paramètre qui est stocké sur le dispositif d'expéditeur ;
déterminer si le paramètre se rapportant à la langue est une langue permise fournir à l'utilisateur un moyen servant à générer le signal de sélection s'il est déterminé que le paramètre se rapportant à la langue est une langue permise.

13. Procédé selon la revendication 1, dans lequel les informations associées comprennent des informations se rapportant au nombre de fois qu'un appel est fait à l'attention d'un dispositif de destinataire, et dans lequel les informations se rapportant au nombre de fois qu'un appel est fait à l'attention d'un dispositif de destinataire sont déterminées en comptant le nombre d'enregistrements de données d'appels issus dans le réseau se rapportant au dispositif de destinataire.

14. Dispositif d'expéditeur (102) agencé pour initialiser un événement de communication à l'attention d'un dispositif de destinataire (110) dans un réseau de communication (104) comportant ;
un moyen d'entrée servant à entrer des informations identifiant le dispositif de destinataire pour initialiser l'événement de communication ;
un moyen de réception agencé pour recevoir en provenance de l'utilisateur (106) du dispositif d'expéditeur un signal de sélection indiquant comme quoi les informations identifiant le dispositif de destinataire ont pour objet de charger la mémoire (126), dans lequel la mémoire stocke les informations identifiant le dispositif de destinataire ainsi que des informations associées, et dans lequel les informations identifiant le destinataire et les informations associées sont stockées sous la forme d'une entrée dans la mémoire ;
**caractérisé en ce que** le dispositif de destinataire comporte par ailleurs :
un moyen de transmission agencé pour transmettre lesdites informations identifiant le dispositif de destinataire jusque dans la mémoire par le biais du réseau de communication, dans lequel chaque entrée dans la mémoire est modifiable par une pluralité d'utilisateurs ayant cherché l'entrée dans la mémoire.

15. Produit programme informatique comportant des moyens de code de programme qui, quand ils sont exécutés sur un dispositif d'expéditeur, mettent en oeuvre les étapes consistant à ;
établir un événement de communication en provenance du dispositif d'expéditeur (102) à l'attention d'un dispositif de destinataire (110) par le biais du réseau de communication (104) en utilisant des informations identifiant le dispositif de destinataire ;
recevoir en provenance d'un utilisateur (106) du dispositif d'expéditeur un signal de sélection indiquant comme quoi lesdites informations identifiant le dispositif de destinataire ont pour rôle de charger une mémoire (126), dans lequel la mémoire stocke les informations identifiant le dispositif de destinataire ainsi que des informations associées, et dans lequel les informations identifiant le destinataire et les informations associées sont stockées sous la forme d'une entrée dans la mémoire ;
**caractérisé en ce que** les moyens de code de programme mettent par ailleurs en oeuvre l'étape consistant à :
transmettre lesdites informations identifiant le dispositif de destinataire en provenance du dispositif d'expéditeur jusque dans la mémoire par le biais du réseau de communication, dans lequel chaque entrée dans la mémoire est modifiable par une pluralité d'utilisateurs ayant cherché l'entrée dans la mémoire.
